# FASCICULE DE BREVET EUROPEEN

(11) **EP 3 311 545 B1**
(45) Date de publication et mention de la délivrance du brevet: **31.08.2022**
(21) Numéro de dépôt: 16739224.0
(22) Date de dépôt: 16.06.2016
(51) Int. Cl.: H04L 69/14, H04L 69/165, H04L 69/326

(54) **PROCÉDÉ ET DISPOSITIF DE GESTION DE PAQUETS DANS UNE CONNEXION MULTI-FLUX ET MULTI-PROTOCOLE**
VERFAHREN UND VORRICHTUNG ZUR VERWALTUNG VON PAKETEN IN EINER MULTI-STREAM- UND MULTI-PROTOKOLL-VERBINDUNG
METHOD AND DEVICE FOR MANAGING PACKETS IN A MULTI-STREAM AND MULTI-PROTOCOL CONNECTION

(30) Priorité: 18.06.2015 FR 1555606
(43) Date de publication de la demande: 25.04.2018
(73) Titulaire: Orange, 92130 Issy-les-Moulineaux (FR)
(72) Inventeur: STEPHAN, Emile, 22560 Pleumeur Bodou (FR); BRAUD, Arnaud, 22300 Lannion (FR); PENHOAT, Joël, 22300 Lannion (FR)
(86) Numéro de dépôt international: PCT/FR2016/051464
(87) Numéro de publication internationale: WO 2016/203161

(56) Documents cités:
- US-A1- 2007 002 863
- US-A1- 2013 201 846
- US-B1- 6 359 882

## Description

### 1. Domaine de l'invention

La demande d'invention se situe dans le domaine des connexions en mode connecté ou non-connecté, entre entités d'un réseau de commutation par paquets, et plus particulièrement les connexions comprenant chacune plusieurs flux empruntant des chemins de caractéristiques différentes.

### 2. Etat de la technique antérieure

Les applications souhaitant bénéficier de ressources de transport optimisées peuvent utiliser une connexion utilisant conjointement plusieurs chemins différents entre deux mêmes extrémités, par exemple entre un client et un serveur. Ainsi, si un des chemins empruntés se trouve congestionné, le trafic généré par l'application peut emprunter les autres chemins. La qualité de service s'en trouve ainsi améliorée. Ce principe a été normalisé par l'IETF (Internet Engineering Task Force, ou Détachement d'ingénierie d'Internet) avec MPTCP (MultiPath Transmission Control Protocol, ou protocole de contrôle de transmission multi-chemin) dans le rfc6824 (request for comments, ou demande de commentaires).

MPTCP est une extension de TCP (Transmission Control Protocol, ou protocole de contrôle de transmissions) où chaque extrémité dispose de plusieurs adresses IP (Internet Protocol) et peut ainsi combiner plusieurs sous-flux TCP dans le même flux principal, chaque sous-flux empruntant des chemins établis indépendamment les uns des autres.

Pour des applications dites "temps réel", telles que de la voix sur IP ou de la télévision sur IP, le fait que dans le protocole TCP des paquets soient émis uniquement après acquittement de la réception des paquets précédents pose problème. En effet, certains des sous-flux TCP de MPTCP s'en trouvent ralentis ou interrompus, ce qui rend la qualité de transmission inacceptable pour ce type d'applications. De plus le nombre de paquets de retransmission, représentant environ 3% du débit, augmente le débit total demandé et accroit la congestion dans les buffers (tampons) des équipements traversés. L'avantage, en terme de débit, de combiner plusieurs flux à l'intérieur d'une même connexion grâce à MPTCP ne se fait donc pas toujours sentir dans le cas d'applications temps réel.

De plus, s'il est vrai que les applications "temps réel" peuvent aussi utiliser le protocole UDP (User Datagram Protocol, ou protocole de datagramme utilisateur) qui est en mode non-connecté, la gestion des problèmes de congestion ne peut pas être faite au niveau de ce protocole.

La demande de brevet américaine US2007/0002863A1 décrit une solution où des paquets de données et des paquets d'acquittement sont réordonnés dans des files d'attente de flux en mode connecté avant transmission en vue d'optimiser l'utilisation des débits disponibles dans chacun des deux sens de transmission, mais la gestion des problèmes de congestion reste limitée au possibilités des protocoles des flux en mode connecté.

Un des buts de l'invention est de remédier à ces inconvénients de l'état de la technique.

### 3. Exposé de l'invention

L'invention vient améliorer la situation à l'aide d'un procédé de gestion conforme à la revendication 1.

Une connexion en mode connecté nécessite pour son établissement une phase préalable de négociation entre les extrémités, mais la transmission des données est fiable. Une connexion en mode non-connecté ne nécessite pas cette négociation préalable, mais la transmission des données est moins fiable.

Grâce à l'invention, si, dans une connexion multi-flux, un flux d'un des deux types connecté ou non-connecté souffre de retard à l'arrivée dans l'entité réceptrice, celle-ci peut provoquer à l'aide du message de retour une action corrective dans l'entité émettrice sans dépendre de ce type de flux, ce qui comporte un avantage en soi car a priori la fiabilité du type de flux en question est affectée. En effet, contrairement à la technique antérieure, une indication de congestion ou un ordre de reprise est porté(e) par le message de retour, qui est émis sur un flux en mode non-connecté si le flux en réception est en mode connecté, ou vice-versa. Ainsi il est possible pour les entités émettrices et réceptrices de profiter des avantages à la fois du mode connecté et du mode non-connecté.

Il est utile de noter que dans ce document le sens voulu de l'expression "message de retour" est similaire à celui de "feedback message" en anglais.

Selon un aspect de l'invention, le flux en mode connecté est un flux TCP.

Le flux en mode non-connecté peut être un flux UDP, un flux UDP-lite selon le rfc3828, ou un flux similaire à UDP mais capable de transmettre un identifiant correspondant à un pointeur de lecture. Par commodité l'expression "flux UDP" est utilisé à la place de "flux en mode non-connecté", dans les cas où UDP ou UDP-lite peuvent être utilisés sans modification.

Le procédé de gestion selon l'invention comporte plusieurs autres avantages, examinés dans les différents cas de figures suivants.

Par exemple, si un flux TCP de la connexion multi-flux est congestionné, l'entité réceptrice signale la congestion sur un flux UDP, et ce même si le flux TCP a activé la fonction dite ECN (Explicit Congestion Notification, rfc3168, ou notification explicite de congestion) et est donc prévu pour utiliser le drapeau ECN-Echo (section 6.1.2 du rfc3168) en sens inverse pour signaler une congestion, car la congestion peut-être telle que retourner l'indication de congestion selon la technique antérieure, c'est-à-dire par le sens inverse du flux TCP, reste sans effet.

Selon l'invention, cette indication (drapeau ECN-Echo) est émise dans les bits ECN de l'entête IP des paquets via le flux UDP dans le message de retour, avec comme effet que l'entité émettrice, entre autre, réduira par exemple le débit du flux TCP congestionné.

Dans un autre exemple, inversement, si un flux UDP est congestionné, l'entité réceptrice peut provoquer la retransmission de paquets en attente par l'envoi sur le flux TCP d'un message de retour indiquant cette congestion.

Selon un aspect de l'invention, l'entité réceptrice émet sur le flux en mode non-connecté le message de retour, et où le message de retour est relatif au flux TCP.

Selon un aspect de l'invention, le message de retour comprend un pointeur de lecture sur un paquet de données du flux TCP.

Grâce à cet aspect, l'entité réceptrice peut commander à l'entité émettrice l'abandon de la transmission de données non reçues dans le flux TCP et la reprise de la transmission au-delà de données non reçues, ce qui n'est pas possible selon la technique antérieure qui utilise le sens inverse du même flux TCP et un pointeur garantissant obligatoirement la retransmission de toutes les données du flux TCP.

Selon un aspect de l'invention, le message de retour comprend une indication de congestion du flux TCP.

Selon un aspect de l'invention, le message de retour comprend un drapeau ECN-Echo.

Grâce à cet aspect, une congestion sur un flux TCP peut être signalée par l'entité réceptrice à l'entité émettrice via le flux UDP, par exemple dans l'entête de la couche RTP au-dessus de UDP (rfc6679). Ceci est particulièrement utile si le flux TCP est congestionné au point que la transmission du message de retour par ce même flux est compromise.

Selon un aspect de l'invention, un champ ECN d'un entête IP du message de retour porte la valeur du drapeau ECN-Echo.

Grâce à cet aspect, comme précédemment et avec la même utilité, une congestion sur un flux TCP peut être signalée par l'entité réceptrice à l'entité émettrice via le flux UDP. Dans cette implémentation particulière, lorsque la fonction ECN n'est pas activée sur le flux UDP reçue (bits ECN a 00), c'est-à-dire même s'il n'y a pas de drapeau ECT dans l'entête IP, l'indication de congestion ECN-Echo est signalée à l'émetteur dans l'entête IP (rfc3168, section 5) en positionnant les 2 bits du champ ECN à une valeur non nulle, par exemple à 11. Ceci va doublement à l'encontre des préjugés de l'homme de métier car d'une part les drapeaux du champ ECN sont utilisés à contresens, c'est-à-dire pour signaler une congestion reçue à l'entité émettrice et non à l'entité réceptrice, et d'autre part l'indication est transportée au niveau de la couche réseau et non d'une couche supérieure. L'indication est donc visible par la couche réseau.

Selon un aspect de l'invention, l'entité réceptrice émet sur le flux TCP le message de retour, et où le message de retour est relatif au flux en mode non-connecté.

Selon un aspect de l'invention, le message de retour comprend un pointeur de lecture sur un paquet de données du flux en mode non-connecté.

Grâce à cet aspect, des paquets qu'un flux UDP a définitivement perdus peuvent être réémis, par exemple par un autre flux TCP de la même connexion. L'entité réceptrice doit simplement être capable d'identifier le bloc de données à partir duquel la transmission reprend, afin de reconstruire la séquence initiale. Ceci permet par exemple à des services IP TV multicast d'éviter des déformations d'image suite à des pertes de données. Le récepteur récupère en unicast des données perdues et qui ne peuvent pas être retransmises sur la partie multicast.

Selon un aspect de l'invention, le message de retour comprend un drapeau ECN-Echo.

Grâce à cet aspect, une congestion sur un flux UDP peut être signalée par l'entité réceptrice à l'entité émettrice via le flux TCP.

De plus cela permet l'activation d'ECN dans un flux UDP (bit ECT de l'entête IP à 1) et le signalement de la congestion ECN-Echo sans implémenter RTP, RTCP et le rfc6679. Ceci est contraire à la technique antérieure, où une congestion sur un flux UDP ne peut pas être signalée sans implémenter le mécanisme de signalement sur une couche de protocole supplémentaire.

Selon un aspect de l'invention, le flux en mode non-connecté est de type IP multicast unidirectionnel, avec un bit ECT activé dans des entêtes IP des paquets du flux.

Grâce à cet aspect, une congestion sur une des branches d'un flux UDP multicast peut être signalée par ECN-Echo par une entité réceptrice sur la connexion TCP. Ceci est contraire à la technique antérieure, où une congestion sur un flux UDP multicast ne peut pas être signalée. Si la connexion TCP est utilisée par un récepteur représentatif du groupe multicast, ceci permet de gérer à bas coût l'adaptation des débits émis vers tout le groupe de terminaux.

Selon un autre aspect, le flux UDP émis est de type IP multicast unidirectionnel et la connexion est établie sur un réseau IP PIM SM (Source Specific Multicast for IP - Sparse Mode, rfc4607, rfc4601) à destination duquel l'entité réceptrice émet un message équivalent au message IGMP (Internet Group Management Protocol, rfc3376, ou protocole de gestion de groupe Internet) d'enregistrement dans le groupe multicast. Le procédé remplace le message IGMP par un message TCP SYN contenant l'option MxCP CAPABLE ayant les drapeaux "read-only" et "multicast" levés. Ce message est émis lors de l'établissement du flux TCP et donc facile à intercepter par une fonction réseau multicast en charge de l'enregistrement des récepteurs. Grâce à cet aspect, le procédé s'adapte simplement à un réseau multicast existant, sans avoir besoin d'implémenter IGMP.

Les différents aspects du procédé de gestion qui viennent d'être décrits peuvent être mis en œuvre indépendamment les uns des autres ou en combinaison les uns avec les autres.

L'invention concerne encore un dispositif de gestion conforme à la revendication 12.

Ce dispositif, apte à mettre en œuvre dans tous ses modes de réalisation le procédé de gestion qui vient d'être décrit, est destiné à être mis en œuvre dans une entité réceptrice d'un flux de données, que ce soit en mode connecté ou en mode non-connecté, cette entité réceptrice comprenant en général un module applicatif consommateur des données reçues.

L'invention concerne aussi un programme d'ordinateur comprenant des instructions pour la mise en œuvre des étapes du procédé de gestion qui vient d'être décrit, lorsque ce programme est exécuté par un processeur.

L'invention concerne enfin un support d'enregistrement lisible par un équipement de gestion sur lequel est enregistré le programme qui vient d'être décrit, pouvant utiliser n'importe quel langage de programmation, et être sous la forme de code source, code objet, ou de code intermédiaire entre code source et code objet, tel que dans une forme partiellement compilée, ou dans n'importe quelle autre forme souhaitable.

### 4. Présentation des figures

D'autres avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
- la figure 1 présente un premier exemple de mise en œuvre du procédé de gestion de paquets de données selon l'invention,
- la figure 2 présente un deuxième exemple de mise en œuvre du procédé de gestion de paquets de données selon l'invention,
- la figure 3 présente un exemple de structure d'un dispositif de gestion mettant en œuvre le procédé de gestion, selon un aspect de l'invention.

### 5. Description détaillée d'au moins un mode de réalisation de l'invention

Dans la suite de la description, on présente des exemples de plusieurs modes de réalisation de l'invention basés sur TCP et UDP, mais l'invention ne se limite pas à ces exemples. L'invention s'applique par exemple à des flux en mode non-connectés tels que des flux UDP-lite, ou tout flux similaire à UDP mais capable de transmettre un pointeur de lecture.

Il est rappelé que MPTCP encode ses paramètres dans le champ TCP d'une longueur maximum de 40 octets. Il est composé d'un paramètre "Kind" d'un octet, d'un paramètre "Length" d'un octet et d'un paramètre "Subtype" de 4 bits. La longueur maximale restante pour la valeur d'un champ MPTCP est donc de 37 octets et 4 bits.

On appelle un "stack IP" l'empilement de couches logicielles gérant séparément chacunes un protocole dans une entité émettrice ou réceptrice. Toutes les données échangées entre deux entités passent par les deux empilages logiciels du client et du server. Dans la suite on appelle "stack MxCP" uniquement la couche logicielle qui s'interface entre l'application consommatrice des données, et la couche logicielle de TCP et de UDP.

Il est rappelé que bien qu'un paquet TCP transmette ses données dans ce qui est appelé un segment, TCP est conçu pour transporter deux séquences d'octets, une dans chaque sens entre les deux entités à chaque extrémité de la connexion. Il y a donc dans l'entête d'un paquet TCP un pointeur sur les données transmises par l'émetteur (champ "Sequence number" de 4 octets) de ce paquet TCP et un pointeur sur les données effectivement reçues par ce même émetteur sur l'autre sens (champ TCP "Acknowledgment number" de 4 octets). Ce champ est utilisé pour gérer les retransmissions. Il identifie le segment émis par l'émetteur : l'émetteur considère qu'un segment est reçu par l'autre extrémité si et seulement si ce segment a été acquitté par le récepteur dans le champ "Acknowledgment number". L'émetteur retransmet ce segment de manière espacée tant qu'il n'a pas reçu son acquittement (entre 3 et 15 fois suivant les implémentations ; par exemple, 5 dans Windows OS).

TCP régule le débit d'une connexion en contrôlant l'écart entre le pointeur d'écriture et le pointeur de lecture.

Dans la suite de ce document, le pointeur sur les données émises est appelé pointeur d'écriture, le pointeur sur les données reçues est appelé pointeur de lecture.

### Nouveau protocole MxCP

L'invention rend possible un nouveau protocole améliorant MPTCP, appelé ci-dessous MxCP. Comme pour le protocole MPTCP, l'API (Application Programming Interface) de MxCP s'appuie sur des fonctions dites "de socket", setsockopt() et getsockopt().

Le protocole MxCP repose sur le message MxCP_CAPABLE activant une connexion MxCP partageant un flux TCP et un flux UDP. Son paramètre indique, au minimum, au destinataire le numéro de port UDP associé.

Les paramètres MxCP sont encodés suivant la section 3 du rfc6824 : longueur, identifiant du paramètre ; valeur.

La valeur de ces paramètres est encodée en binaire de façon connue (addresse IPv4 sur 4 octets, entier...).

L'annexe A fournit à titre d'exemple une liste d'autres primitives sur lesquelles peut s'appuyer l'API de MxCP.

Il est possible d'implémenter MxCP en tant qu'extension de MPTCP, c'est-à-dire une modification de MPTCP, ou en tant qu'option nouvelle de TCP.

### MxCP. extension de MPTCP

Le protocole MPTCP est identifié par la valeur 30 dans le champ "Option-Kind" du paquet TCP. Dans ce mode les paramètres sont identifiés comme des nouveaux sous-types de MPTCP, suivant la section 8 du rfc6824, et encodés comme décrit dans la section 3 du rfc6824. Ce mode est identifié par le champ "version" ou par un des drapeaux de la valeur du champ MP_CAPABLE décrit dans la section 3.1 du rfc6824.

### MxCP, nouvelle option de TCP

Il s'agit d'une implémentation similaire à MPTCP mais indépendante. Dans ce mode, à l'instar de MPTCP, MxCP est identifié par exemple par la valeur 31 dans le champ TCP "Option-Kind" du paquet TCP. Les paramètres de MxCP sont identifiés séparément et encodés suivant le format décrit dans la section 3 du rfc6824. Le fonctionnement est identique au mode précédent mais incompatible avec MPTCP.

### MxCP, implémenté à l'aide d'une version de UDP dérivée de UDP-lite, MxUDP

Dans un mode particulier, le premier flux est de type TCP et au moins le premier flux UDP est d'un nouveau type dérivé de UDP-lite, appelé MxUDP, permettant au moins l'acquittement des segments TCP sur le flux MxUDP :
UDP-lite (rfc3828) est un protocole existant qui dérive directement de UDP. Il respecte le format UDP mais scinde le champ "Checksum" de UDP de 32 bits en deux afin de créer un champ "Checksum Coverage" de 16 bits et un champ "Checksum" de 16 bits.
MxUDP respecte également le format de UDP et scinde également le champ "Checksum" de UDP de 32 bits en deux champs :
   un champ "MxUDP_control" de 16 bits.
   un champ "MxUDP_Checksum" de 16 bits.
Le champ "MxUDP_control" est scindé en deux éléments :
MxUDP_Type (4 bits)
et MxUDP_Len (12 bits).

L'annexe B décrit le champ 'MxUDP_Type' qui indique le type de message MxUDP.

### MxCP, Implémentation rudimentaire

Une implémentation rudimentaire est possible avec MxCP en tant qu'extension de MPTCP ou MxCP en tant qu'option de TCP. Seul le message MxCP_CAPABLE est nécessaire, il est véhiculé dans le premier message du flux TCP SYN ou dans le premier message du flux MxUDP.

Un exemple d'implémentation simple, illustré dans l'annexe C, permet l'activation d'un flux IP multicast unidirectionnel jusqu'au sous réseau raccordant le client. Dans ce cas le paramètre de MxCP décrit en plus l'adresse IP multicast du flux UDP demandé. Le réseau d'accès capture le message TCP SYN et en extrait l'adresse du flux multicast. Cela remplace le message IGMP JOIN habituellement émis par un récepteur IP multicast.

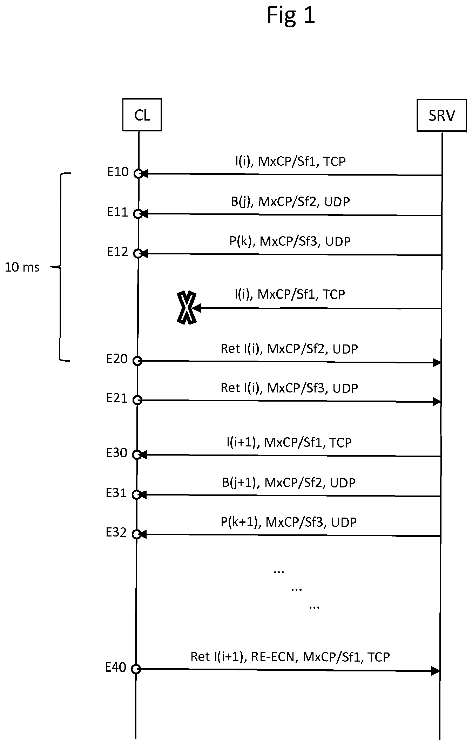

La **figure 1** présente un premier exemple de mise en œuvre du procédé de gestion de paquets de données selon l'invention. Cet exemple illustre l'application de l'invention à la réception de trames MPEG, utilisées pour les flux vidéo et particulièrement pour les flux IPTV.

Une connexion MxCP est établie entre un client CL et un serveur SRV pour transmettre des données de type MPEG (IPTV) du serveur vers le client. Un flux TCP Sf1 existe éventuellement par défaut, auquel cas les deux entités CL et SRV modifient la connexion TCP en connexion MxCP par l'envoi d'un message MxCP_CAPABLE par exemple avec les options suivantes :

```
    {
    "MxCP_CANCEL_DELAY": 10ms,
    "MxCP_CONGESTION_ASYNC_NOTIFICATION_ENABLE": 3
    }
    A ce stade les flux Sf1 et Sf2 sont donc créés.
```

Le client CL crée, en plus du flux Sf1 et Sf2, un nouveau flux UDP Sf3 dans la connexion MxCP, par exemple par l'envoi d'un message similaire au message MP_JOIN du protocole MPTCP.

Les données MPEG à transmettre sont des trames de trois types se distinguant par des caractéristiques différentes tels que résolution, fréquence de renouvellement, etc. : les trames I, les trames B et les trames P. Le serveur SRV choisit de transmettre les trames I sur le flux TCP, les trames B sur le Sf2 et les trames P sur Sf3. Il effectue donc un appel à la primitive setsockopt() avec le paramètre MxCP_PREF pour rappeler ses préférences lors de l'émission des données des trames 1 (setsockopt(MxCP_PREF, 'Sf1')), lors de l'émission des données des trames B sur le Sf2 (setsockopt(MxCP_PREF, 'Sf2')) et des trames P sur Sf3 (setsockopt(MxCP_PREF, 'Sf3')).

La taille maximale d'un segment TCP, mesurée en octets, est négociée par le paramètre MSS (Maximum Segment Size, ou taille maximale de segment) à l'ouverture de la connexion TCP. Dans le cas de paquets UDP, on parle de datagrammes UDP. La taille maximale d'un paquet UDP n'est pas négociée.

Le stack MxCP du serveur SRV transmet sur le flux Sf1 les trames I dans des segments TCP, c'est-à-dire des ensembles de paquets TCP consécutifs, en conservant un pointeur de lecture sur la dernière donnée bien reçue par le client CL (dernier octet du dernier segment dont l'acquittement a été reçu par le serveur) et un pointeur d'écriture sur la dernière donnée transmise par le serveur SRV (dernier octet du dernier segment émis), ce qui est le fonctionnement normal de TCP.

Lors d'une étape E10, le client CL reçoit les premiers paquets de la (i)ième trame I par le flux Sf1.

Lors d'une étape E11, le client CL reçoit les premiers paquets de la (j)ième trame B par le flux Sf2.

Lors d'une étape E12, le client CL reçoit les premiers paquets de la (k)ième trame P par le flux Sf3.

Suite à des pertes de paquets le serveur SRV retransmet des paquets de la (i)ième trame I, ce qui génère un retard et créé une famine de donnée dans le décodeur du client CL.

Lors d'une étape E20, après un délai de 10 millisecondes correspondant à MxCP_CANCEL_DELAY, le client CL considère que les données de cette I-frame arriveront trop tard pour être décodées et affichées, et que en plus les paquets correspondants (augmentés des paquets de trame B et I associées) et leurs retransmissions empêchent et retardent l'arrivée des paquets de la I-frame suivante. Il force donc l'acquittement sur Sf2 des paquets inutiles et avance le pointeur de lecture d'autant. Par un calcul dont un exemple est donné plus bas, il détermine le dernier octet du paquet à acquitter, c'est-à-dire le dernier paquet avant le début de la trame I suivante, afin d'obtenir au plus vite les données de la trame I suivante, c'est-à-dire la (i+1)ième trame I. Optionnellement, le client CL peut effectuer cet acquittement sur le flux Sf3 (étape E21), ou sur les deux flux Sf2 et Sf3 à la fois, afin d'augmenter les chances d'arrêter la re-transmission des paquets inutiles.

Le stack MxCP du serveur SRV reçoit le message d'acquittement sur le flux UDP Sf2, qui comprend le pointeur acquittant la lecture, c'est-à-dire la soi-disant réception de tous les paquets de la (i)ième trame I par le client CL.

Le stack MxCP du serveur SRV positionne donc le pointeur de lecture du flux TCP Sf1 à cet endroit (le paquet contenant le premier octet de la trame I suivante) et cesse la retransmission des paquets précédents. Il se focalise donc sur la transmission des paquets des données de cette trame I et des trames suivantes.

Lors d'une étape E30, le client CL reçoit donc les premiers paquets de la (i+1)ième trame I par le flux Sf1.

De plus, le serveur SRV considère comme émises les autres données associées aux autres types de trames B ou P qui se trouvent séquentiellement avant la fin de la dernière trame I reçue et force le positionnement des pointeurs d'écritures de Sf2 et Sb3 sur le dernier paquet de la trame I suivante afin de commencer à transmettre les trames B et P sur les flux Sf2 et Sf3.

Lors d'une étape E31, le client CL reçoit donc les premiers paquets de la (j+1)ième trame B par le flux Sf2.

Lors d'une étape E32, le client CL reçoit donc les premiers paquets de la (k+1)ième trame P par le flux Sf3.

Optionnellement, lors d'une étape E40, le client CL peut utiliser le drapeau ECN-Echo dans les paquets TCP acquittant la réception des données des trames I suivantes, afin d'indiquer au serveur SRV qu'il doit ralentir son débit.

Le serveur SRV reçoit cette indication et choisit un débit d'encodage plus faible. Il utilise par exemple des trames I plus petites afin d'avoir un débit d'encodage plus petit pour la même qualité.

Optionnellement, le serveur aura avantageusement déjà effectué ce choix de réduire le débit lors du forçage du positionnement des pointeurs d'écritures de Sf2 et Sb3 de l'étape précédente, ce qui évite le recours au drapeau ECN-Echo.

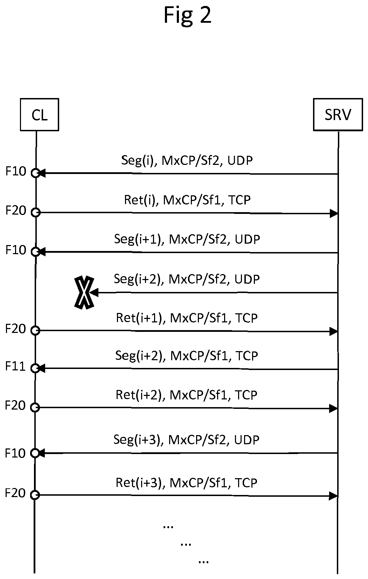

La **figure 2** présente un deuxième exemple de mise en œuvre du procédé de gestion de paquets de données selon l'invention. Dans cet exemple les données du flux TCP sont transmises sur UDP mais retransmises et acquittées sur TCP. Cet exemple s'applique quand un service veut différencier la QoS des paquets retransmis pour accélérer la retransmission des segments à retransmettre d'un service IPTV afin d'éviter la déformation de l'image décodée suite à des pertes de données, et/ou pour ralentir les paquets de retransmission relativement à l'ensemble des paquets initiaux afin de forcer la diminution des débits des flux concernés.

Une connexion MxCP est établie entre un client et un serveur pour transmettre des données d'un flux MPEG du serveur vers le client. Chaque donnée comprend un certain nombre de paquets. Un flux TCP Sf1 et un flux Sf2 existent donc entre deux entités client et serveur.

La connexion est créée par l'envoi d'un message MxCP_CAPABLE avec l'option { port :0 } indiquant que le port UDP est le même que celui de TCP.

Le serveur transmet les segments TCP sur le flux UDP Sf2, reçues par le client lors d'étapes F10 successives (Seg(i), Seg(i+1)).

Lors d'étapes F20 correspondantes (Ret(i), Ret(i+1)), le client acquitte sur le flux TCP Sf1 la réception des données en transmettant un pointeur de lecture aligné sur le dernier segment TCP reçu.

Le serveur tient à jour le pointeur de lecture reçu du client et un pointeur d'écriture sur la dernière donnée transmise, ce qui reflète un fonctionnement normal de TCP sauf qu'il est couplé avec UDP.

Si, comme pour la deuxième étape F20 de la figure 2, une étape F20 est effectuée avec un ou plusieurs segments de retard, grâce au pointeur de lecture aligné sur la dernière donnée reçue, le serveur déduit la non-réception sur sf2 de ce ou ces segments non reçus (Seg(i+2)). Le serveur sait qu'il a déjà émis ce ou ces segments et les retransmet sur le flux TCP Sf1, reçues par le client lors d'une étape F11 (Seg(i+2)), ce qui est le fonctionnement normal de TCP dont bénéficie ici MxCP, grâce à l'invention.

En parallèle le serveur continue la transmission sur le flux UDP Sf2 des données situées après son pointeur d'écriture (étape F10 avec Seg(i+3), et suivantes).

Le client acquitte lors d'une étape F20 sur le flux TCP Sf1 la réception des segments retransmis en augmentant la valeur de son pointeur de lecture en conséquence. Le serveur aligne son pointeur de lecture sur cette valeur.

On comprend que grâce à l'invention, le protocole MxCP bénéficie à la fois de l'efficacité temps réel inhérente à UDP et des possibilités de réparation d'erreur inhérente à TCP.

Dans certains modes de réalisation de l'invention, le client doit émettre vers le serveur un pointeur de lecture sur des données en attente, c'est-à-dire non encore reçues. Ce pointeur doit alors être déduit ou calculé par l'application dans le client, ou par le stack MxCP du client. C'est le cas par exemple lorsque l'application du client souhaite éviter la famine de son buffer de décodage. Lors de la création de la connexion MxCP l'application du client indique au stack MxCP dans le paramètre MxCP_CANCEL_DELAY qu'elle souhaite ignorer les données qui arriveraient 3ms trop tard. Pendant la transmission des données l'application du client détecte que son buffer de décodage est presque vide et utilise la primitive setsockopt(MxCP_CANCEL_DELAY,3) pour le signaler au stack MxCP.

Le stack MxCP du client convertit ce délai en un nombre de segments. Par exemple il estime le nombre N de segments en cours de retransmission à partir des différences entre les instants d'arrivée des segments encadrant des segments manquants (exemple: le segment 14 est reçu à l'instant 495 millisecondes. Son prédécesseur, le segment 9 est reçu 3 millisecondes plutôt, à l'instant 492 millisecondes. Les segments 10, 11, 12 et 13 ne sont donc pas encore reçus. N vaut donc 4). Le stack MxCP demande au serveur l'arrêt de la retransmission de cette séquence en forçant l'avancement de son pointeur de lecture : il force l'acquittement via le flux UDP de ces N segments en transmettant un pointeur de lecture aligné sur le dernier octet du segment 14.

Le serveur avance alors son pointeur de lecture sur le dernier octet du segment 14. Les paquets non reçus par le client cessent d'être retransmis, libérant ainsi de la place sur les liens et dans les buffers des équipements traversés pour rattraper le retard accumulé.

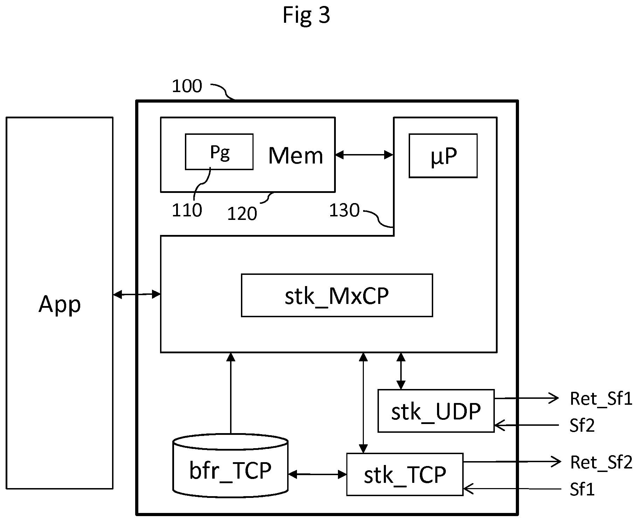

En relation avec la **figure 3****,** on présente maintenant un exemple de structure d'un dispositif de gestion, selon un aspect de l'invention.

Le dispositif 100 de gestion met en œuvre le procédé de gestion, dont différents modes de réalisation viennent d'être décrits.

Un tel dispositif 100 peut être mis en œuvre dans n'importe quelle entité réceptrice d'un flux de données, que ce soit en mode connecté ou en mode non-connecté, cette entité réceptrice comprenant aussi un module applicatif App consommateur de flux de données.

Par exemple, le dispositif 100 comprend une unité de traitement 130, équipée par exemple d'un microprocesseur µP, et pilotée par un programme d'ordinateur 110, stocké dans une mémoire 120 et mettant en œuvre le procédé de gestion selon l'invention. A l'initialisation, les instructions de code du programme d'ordinateur 110 sont par exemple chargées dans une mémoire RAM, avant d'être exécutées par le processeur de l'unité de traitement 130.

Un tel dispositif 100 comprend :
- un premier module d'émission-réception stk_TCP, apte à émettre (Ret_Sf2) et recevoir (Sf1) un flux en mode connecté,
- un deuxième module d'émission-réception stk_UDP, apte à émettre (Ret_Sf1) et recevoir (Sf2) un flux en mode non-connecté,
- une mémoire tampon bfr_TCP, apte à stocker des données reçues d'un flux en mode connecté,
- un module de traitement stk_MxCP, apte à analyser un flux reçu sur l'un des premier ou deuxième modules d'émission-réception stk_TCP ou stk_UDP, à déterminer si un message de retour doit être émis, à générer son contenu, et à demander à l'autre module d'émission-réception stk_UDP ou stk_TCP l'émission du message de retour.

Le module de traitement stk_MxCP communique avec le module applicatif App par exemple à l'aide de fonctions primitives telles que décrites dans le tableau de l'annexe A.

Les modules décrits en relation avec la figure 3 peuvent être des modules matériels ou logiciels.

Le module stk_TCP peut être un stack TCP. Le module stk_UDP peut être un stack UDP, un stack UDP-lite ou un stack MxUDP.

Les exemples de réalisation de l'invention qui viennent d'être présentés ne sont que quelques-uns des modes de réalisation envisageables. Ils montrent que l'invention permet de faire bénéficier à une connexion par paquets à la fois des avantages des flux en mode connectés, tels que TCP, et des flux en mode non-connectés, tels que UDP.

Annexe A: primitives de l'API de MxCP

| Symbole | Commentaire |
|---|---|
| MxCP_CAPABLE | Active l'option MxCP dans MPTCP. Indique au récepteur que le flux UDP est actif coté émetteur. Indique aux fonctions 'réseau' d'ouvrir le port UDP associé (*port UDP dans les NAT afin de se passer de protocole comme STUN (Simple Traversai of User Datagram Protocol Through Network Address Translators, rfc3489).* |
| 'flowType' : 2 bits { UDP, UDP-lite, MxUDP } | |
| 'port' : 2 bytes Integer | |
| Valeur 0 : le port UDP est le même que le port TCP | |
| Valeur N : le port UDP est 'N' | |
| 'addressType' : optionnel booleen { Ipv4 ou IPv6 } | |
| Transmis dans entête MxCP Identifiant 0x8 | |
| MxCP_CONGESTION_SYNC_NOTIFICATION_ENABLE | Active ECN-Echo sur les flux UDP et TCP. |
| Integer [1..255] | Demande à l'autre extrémité l'activation de ECN sur les flux |
| Valeur : nombre de bits ECT reçus qui déclenchera le recus signalement d'une congestion ECN-Echo sur l'autre flux. | |
| Transmis : La transmission du paramètre a l'autre extrémité est optionnelle | |
| MxCP_CONGESTION_ASYNC_NOTIFICATION_ENABLE | Active ECN-Echo sur le flux TCP seulement. |
| Integer [1..255] | Demande à l'autre extrémité l'activation de ECN sur les flux reçus. |
| Valeur : nombre de bits ECT consécutifs reçus (ou reçus | |
| sur le même laps de temps) qui déclenche le signalement | Active l'envoi de l'indication ECN-Echo à la place des bits ECN dans le flux UDP. |
| MxCP_CANCEL_DELAY | Délai entre l'instant d'émission du segment du pointeur d'écriture et l'instant d'émission du pointeur de lecture à partir duquel certains segments sont à poubelliser (à partir duquel le pointeur de lecture de l'émetteur doit effectuer un saut). |
| Integer [1..255] | |
| Transmis dans entête MxCP | |
| Identifiant 0x9 | |
| MxCP_SUB_FLOW_READ_ONLY | Indique au récepteur que le flux UDP est actif coté émetteur en lecture seule. |
| 'flowType' : 2 bits { UDP, UDP-lite, MxUDP } | |
| "addressType' : booleen { IPv4 ou IPv6 } 'unicast': booleen | Indique aux fonctions 'réseau' qu'il s'agit d'un flux unidirectionnel et que donc le récepteur n'est pas autoriser à émettre sur ce flux UDP. |
| port' : Integer[0..63536] | |
| Valeur 0 : le port UDP est le même que le port TCP | Multicast==1: Indique aux fonctions d'un réseau multicast tel que PIM SSM de préparer le réseau multicast afin que l'arbre multicast puisse délivrer le flux UDP: |
| Valeur N : le port UDP est 'N' | |
| Address : bytes [4] ou bytes[16] | |
| | - Activation de la réception de la source correspondant à l'émetteur TCP ; |
| Transmis dans entête MxCP | |
| Identifiant 0xA | - activation du trafic multicast dans le réseau d'attachement du récepteur (capture du message MXCP SUB_FLOW_READ_ONLY par les routeurs d'accès) ; |
| | - mise en place du réseau multicast entre la source et le réseau d'attachement des récepteurs UDP (travail de protocole PIM dans les routeurs déclenchés par les routeurs d'accès) ; |
| MxCP_PREF: | Sélectionne le flux à utiliser de préférence pour émettre les données. L'algorithme du stack peut choisir un autre flux compte tenu de l'état de la connexion. Par défaut le stack MxCP utilise le flux TCP initiale. |
| Valeur: id du sous flux à utiliser | |
| Non transmis dans entête MxCP | |
| ADD_ADDR | Les autres paramètres de MPTCP sont repris dans MxCP. Leur sémantique est conservée. |
| REMOVE_ADDR | |
| MP_PRIO | |
| MP_FAIL | |
| MP_FASTCLOSE | |

Annexe B: structure du champ MxUDP_Type

| MxUDP Type | message MxUDP |
|---|---|
| Bit 0 à 0 | réservé |
| Bit 0 à 1 | transporte un segment TCP dans la partie donnée du message UDP; transporte les champs TCP "sequence number" et "Acknowledgment number" dans le champ "MxUDP_Data". |
| | "MxUDP_Len" indique la longueur du champ "MxUDP_Data" et vaut 12. |
| | PS : La longueur maximale du champ "MxUDP_Data" est de 12 octets afin de garantir la place pour le transport d'un segment TCP : En effet la taille de l'entête TCP est au minimum 12 octets plus long que l'entête UDP. Une longueur du champ "MxUDP_Data" de 12 octets laisse donc dans tous les cas assez de place pour transporter les données d'un segment TCP. |
| Bit 1 a 3 | Réservées |

Annexe C: exemple simple d'un message MxCP_CAPABLE

| Symbole | | Commentaire |
|---|---|---|
| MxCP_CAPABLE | | Active l'option MxCP dans MPTCP. |
| exemple de valeur { | | Indique au récepteur que le flux UDP est actif coté émetteur. |
| | port :0 | Indique aux fonctions 'réseau' d'ouvrir le port UDP associé. |
| | readonly : 0 | Valeur 0 : le port UDP est le même que le port TCP |
| | multicast :1 | Valeur N : le port UDP est 'N' |
| | addrType: 'ipv4' | Readonly==1 : Indique au destinataire du message que le flux UDP est actif mais en lecture seule (cas normal ou un client se connecte à un serveur et où le serveur émet le contenu). Indique aux fonctions 'réseau' qu'il s'agit de unidirectionnel et que donc le récepteur n'est pas autoriser à émettre sur ce flux UDP. |
| | addr: '224.1.1.1' | |
| } | | |
| | | Multicast==1 : Les fonctions 'réseau' peuvent préparer le réseau multicast afin que l'arbre multicast puisse délivrer le flux UDP : activation de la réception de la source et préparation du réseau multicast en amont du réseau d'attachement du récepteur |

## Revendications

1. **Procédé** de gestion, dans une entité réceptrice (CL), de paquets de données (I(i); Seg(i)) reçus depuis une connexion de couche transport établie avec une entité émettrice (SRV),
la connexion comprenant au moins un flux en mode connecté (Sf1), dit premier flux, et au moins un flux en mode non-connecté (Sf2, Sf3), dit second flux,
le procédé de gestion étant **caractérisé en ce qu'**il comprend une étape d'émission (E20; F20) , par l'entité réceptrice, d'un message (Ret I(i); Ret(i)), dit de retour, relatif à au moins un paquet de données de l'un des premier ou second flux, le message de retour étant émis vers l'entité émettrice sur le second flux si le message de retour est relatif à au moins un paquet de données (I(i)) du premier flux, et sur le premier flux si le message de retour est relatif à au moins un paquet de données (Seg(i)) du second flux.

2. **Procédé** de gestion selon la revendication 1, où le premier flux est un flux TCP.

3. **Procédé** de gestion selon la revendication 2, où l'entité réceptrice émet sur le second flux le message de retour, et où le message de retour est relatif au flux TCP.

4. **Procédé** de gestion selon la revendication 3, où le message de retour comprend un pointeur de lecture sur un paquet de données du flux TCP.

5. **Procédé** de gestion selon la revendication 3, où le message de retour comprend une indication de congestion du flux TCP.

6. **Procédé** de gestion selon la revendication 5, où le message de retour comprend un drapeau ECN-Echo.

7. **Procédé** de gestion selon la revendication 5, où un champ ECN d'un entête IP du message de retour porte la valeur du drapeau ECN-Echo.

8. **Procédé** de gestion selon la revendication 2, où l'entité réceptrice émet sur le flux TCP le message de retour, et où le message de retour est relatif au second flux.

9. **Procédé** de gestion selon la revendication 8, où le message de retour comprend un pointeur de lecture sur un paquet de données du second flux.

10. **Procédé** de gestion selon la revendication 8, où le message de retour comprend un drapeau ECN-Echo.

11. **Procédé** de gestion selon la revendication 10, où le second flux est de type IP multicast unidirectionnel, avec un bit ECT activé dans des entêtes IP des paquets du flux.

12. **Dispositif** (100) de gestion, dans une entité réceptrice (CL), de paquets de données reçus depuis une connexion établie avec une entité émettrice (SRV), comprenant un premier module d'émission-réception (Stk_TCP) apte à émettre et recevoir un flux en mode connecté (Sf1) et un deuxième module d'émission-réception (Stk_UDP) apte à émettre et recevoir un flux en mode non-connecté (Sf2, Sf3), la connexion comprenant au moins un flux en mode connecté et au moins un flux en mode non-connecté, le dispositif étant **caractérisé en ce qu'**un message (Ret I(i); Ret(i)), dit de retour, relatif à au moins un paquet de données (I(i); Seg(i)), est émis par le premier module d'émission-réception si l'au moins un paquet de données (Seg(i)) est reçu par le deuxième module d'émission-réception, ou est émis par le deuxième module d'émission-réception si l'au moins un paquet de données (I(i)) est reçu par le premier module d'émission-réception.

13. **Programme d'ordinateur** comprenant des instructions pour la mise en œuvre des étapes du procédé de gestion selon la revendication 1, lorsque ce procédé est exécuté par un processeur.

14. **Support d'enregistrement** lisible par une entité réceptrice sur lequel est enregistré le programme selon la revendication 13.

## Patentansprüche

1. Verfahren zur Verwaltung, in einer Empfangsentität (CL), von Datenpaketen (I(i); Seg(i)), die von einer mit einer Sendeentität (SRV) aufgebauten Transportschichtverbindung kommend empfangen werden, wobei die Verbindung mindestens einen Fluss im verbundenen Modus (Sf1), erster Fluss genannt, und mindestens einen Fluss im nicht verbundenen Modus (Sf2, Sf3), zweiter Fluss genannt, enthält,
wobei das Verwaltungsverfahren **dadurch gekennzeichnet ist, dass** es einen Sendeschritt (E20; F20), durch die Empfangsentität, einer so genannten Rückmeldung (Ret I(i); Ret(i)) bezüglich mindestens eines Datenpakets eines der ersten oder zweiten Flüsse enthält, wobei die Rückmeldung an die Sendeentität über den zweiten Fluss, wenn die Rückmeldung sich auf mindestens ein Datenpaket (I(i)) des ersten Flusses bezieht, und über den ersten Fluss gesendet wird, wenn die Rückmeldung sich auf mindestens ein Datenpaket (Seg(i)) des zweiten Flusses bezieht.

2. Verwaltungsverfahren nach Anspruch 1, wobei der erste Fluss ein TCP-Fluss ist.

3. Verwaltungsverfahren nach Anspruch 2, wobei die Empfangsentität die Rückmeldung über den zweiten Fluss sendet, und wobei die Rückmeldung sich auf den TCP-Fluss bezieht.

4. Verwaltungsverfahren nach Anspruch 3, wobei die Rückmeldung einen Lesezeiger auf ein Datenpaket des TCP-Flusses enthält.

5. Verwaltungsverfahren nach Anspruch 3, wobei die Rückmeldung eine Stauanzeige des TCP-Flusses enthält.

6. Verwaltungsverfahren nach Anspruch 5, wobei die Rückmeldung ein ECN-Echo-Flag enthält.

7. Verwaltungsverfahren nach Anspruch 5, wobei ein ECN-Feld einer IP-Kopfzeile der Rückmeldung den Wert des ECN-Echo-Flags trägt.

8. Verwaltungsverfahren nach Anspruch 2, wobei die Empfangsentität die Rückmeldung über den TCP-Fluss sendet, und wobei die Rückmeldung sich auf den zweiten Fluss bezieht.

9. Verwaltungsverfahren nach Anspruch 8, wobei die Rückmeldung einen Lesezeiger auf ein Datenpaket des zweiten Flusses enthält.

10. Verwaltungsverfahren nach Anspruch 8, wobei die Rückmeldung ein ECN-Echo-Flag enthält.

11. Verwaltungsverfahren nach Anspruch 10, wobei der zweite Fluss vom unidirektionalen IP-Multicast-Typ ist, mit einem ECT-Bit aktiviert in IP-Kopfzeilen der Pakete des Flusses.

12. Vorrichtung zur Verwaltung (100), in einer Empfangsentität (CL), von Datenpaketen, die von einer mit einer Sendeentität (SRV) aufgebauten Verbindung ausgehend empfangen werden, die ein erstes Sende-Empfangs-Modul (Stk_TCP), das fähig ist, einen Fluss im verbundenen Modus (Sf1) zu senden und zu empfangen, und ein zweites Sende-Empfangs-Modul (Stk_UDP) enthält, das fähig ist, einen Fluss im nicht verbundenen Modus (Sf2, Sf3) zu senden und zu empfangen, wobei die Verbindung mindestens einen Fluss im verbundenen Modus und mindestens einen Fluss im nicht verbundenen Modus enthält, wobei die Vorrichtung **dadurch gekennzeichnet ist, dass** eine so genannte Rückmeldung (Ret I(i); Ret(i)) bezüglich mindestens eines Datenpakets (I(i); Seg(i)) vom ersten Sende-Empfangs-Modul gesendet wird, wenn das mindestens eine Datenpaket (Seg(i)) vom zweiten Sende-Empfangs-Modul empfangen wird, oder vom zweiten Sende-Empfangsmodul gesendet wird, wenn das mindestens eine Datenpaket (I(i)) vom ersten Sende-Empfangs-Modul empfangen wird.

13. Computerprogramm, das Anweisungen zur Durchführung der Schritte des Verwaltungsverfahrens nach Anspruch 1 enthält, wenn dieses Verfahren von einem Prozessor ausgeführt wird.

14. Speicherträger, der von einer Empfangsentität lesbar ist, über den das Programm nach Anspruch 13 gespeichert ist.

## Claims

1. **Method** for managing, in a receiving entity (CL), data packets (I(i); Seg(i)) received from a transport layer connection set up with a sending entity (SRV), the connection comprising at least one stream in connected mode (Sf1), termed a first stream, and at least one stream in connectionless mode (Sf2, Sf3), termed a second stream,
the management method being **characterized in that** it comprises a step of the receiving entity sending (E20; F20) a message (Ret I(i); Ret(i)), termed a return message, relating to at least one data packet of one of the first and second streams, the return message being sent to the sending entity on the second stream if the return message relates to at least one data packet (I(i)) of the first stream, and on the first stream if the return message relates to at least one data packet (Seg(i)) of the second stream.

2. Management **method** according to Claim 1, in which the first stream is a TCP stream.

3. Management **method** according to Claim 2, in which the receiving entity sends the return message on the second stream, and in which the return message relates to the TCP stream.

4. Management **method** according to Claim 3, in which the return message comprises a read pointer to a data packet of the TCP stream.

5. Management **method** according to Claim 3, in which the return message comprises an indication of congestion of the TCP stream.

6. Management **method** according to Claim 5, in which the return message comprises an ECN-Echo flag.

7. Management **method** according to Claim 5, in which an ECN field of an IP header of the return message carries the value of the ECN-Echo flag.

8. Management **method** according to Claim 2, in which the receiving entity sends the return message on the TCP stream, and in which the return message relates to the second stream.

9. Management **method** according to Claim 8, in which the return message comprises a read pointer to a data packet of the second stream.

10. Management **method** according to Claim 8, in which the return message comprises an ECN-Echo flag.

11. Management **method** according to Claim 10, in which the second stream is of unidirectional multicast IP type, with an ECT bit activated in IP headers of the packets of the stream.

12. **Device** (100) for managing, in a receiving entity (CL), data packets received from a connection set up with a sending entity (SRV), comprising a first sending/receiving module (Stk_TCP) able to send and receive a stream in connected mode (Sf1) and a second sending/receiving module (Stk_UDP) able to send and receive a stream in connectionless mode (Sf2, Sf3), the connection comprising at least one stream in connected mode and at least one stream in connectionless mode, the device being **characterized in that** a message (Ret I(i); Ret(i)), termed a return message, relating to at least one data packet (I(i); Seg(i)), is sent by the first sending/receiving module if the at least one data packet (Seg(i)) is received by the second sending/receiving module, or is sent by the second sending/receiving module if the at least one data packet (I(i)) is received by the first sending/receiving module.

13. **Computer program** comprising instructions for implementing the steps of the management method according to Claim 1, when this method is executed by a processor.

14. **Recording medium** which can be read by a receiving entity and on which the program according to Claim 13 is recorded.
